(19) Europäisches Patentamt
European Patent Office
Office européen des brevets

(11) **EP 2 785 952 B1**

(12) **FASCICULE DE BREVET EUROPEEN**

(45) Date de publication et mention
de la délivrance du brevet:
**28.08.2019 Bulletin 2019/35**

(21) Numéro de dépôt: **12806567.9**

(22) Date de dépôt: **23.11.2012**

(51) Int Cl.:
***E21B 17/01*** *(2006.01)*

(86) Numéro de dépôt international:
**PCT/FR2012/052717**

(87) Numéro de publication internationale:
**WO 2013/079857 (06.06.2013 Gazette 2013/23)**

(54) **INSTALLATION DE LIAISONS FOND-SURFACE FLEXIBLES MULTIPLES SUR AU MOINS DEUX NIVEAUX**

VORRICHTUNG FÜR FLEXIBLE UND MANNIGFALTIGE VERBINDUNGEN ZWISCHEN MEERESGRUND UND OBERFLÄCHE AUF MINDESTENS ZWEI EBENEN

FLEXIBLE MULTIPLE SEABED-TO-SURFACE CONNECTIONS FACILITY ON AT LEAST TWO LEVELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2011 FR 1160934**

(43) Date de publication de la demande:
**08.10.2014 Bulletin 2014/41**

(73) Titulaire: **Saipem SA**
**78180 Montigny-le-Bretonneux (FR)**

(72) Inventeur: **PIONETTI, François Régis**
**F-50450 La Baleine (FR)**

(74) Mandataire: **Cabinet Beau de Loménie**
**Tour Méditerranée**
**65 avenue Jules Cantini**
**13006 Marseille (FR)**

(56) Documents cités:
**EP-A2- 0 251 488      WO-A1-00/31372**
**WO-A1-2011/061422**

## Description

La présente invention concerne une installation de liaisons fond-surface multiples souples entre des têtes de puits, équipements ou les extrémités de conduites sous-marines reposant au fond de la mer et un support flottant en surface, comprenant une multiplicité de lignes flexibles notamment des conduites flexibles dont les extrémités inférieures sont reliées aux extrémités d'une pluralité de conduites sous-marines reposant au fond de la mer ou directement à des têtes de puits ou équipements reposant au fond de la mer.

Dans la présente description, on entend par « ligne flexible », des conduites ou câbles capables d'accepter des déformations importantes sans engendrer des efforts de rappel significatifs, tel que des conduites flexibles définies ci-après, mais aussi des câbles ou conduites de transfert d'énergie ou d'informations telles que des câbles électriques, des câbles de contrôle ou des conduites de transfert de fluide hydraulique alimentant des équipements hydrauliques telles que des vérins ou des conduites contenant des fibres optiques ; ou encore un ombilical de commande comportant une ou plusieurs conduites hydrauliques et/ou des câbles électriques pour la transmission d'énergie et/ou d'informations.

Le secteur technique de l'invention est plus particulièrement le domaine de la fabrication et de l'installation de liaisons fond-surfaces pour l'extraction sous-marine de pétrole, de gaz ou autre matériau soluble ou fusible ou d'une suspension de matière minérale à partir de tête de puits immergé jusqu'à un support flottant, pour le développement de champs de production installés en pleine mer au large des côtes. L'application principale et immédiate de l'invention étant dans le domaine de la production pétrolière.

Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

Mais il peut s'agir également de plateforme flottante semi-submersible installée de manière provisoire pour quelques années, par exemple en attente de la construction et de l'installation définitive d'un support flottant de type FPSO.

On connaît des liaisons fond-surface d'une conduite sous-marine reposant au fond de la mer, liaison du type tour-hybride comprenant :

- un riser vertical dont l'extrémité inférieure est ancrée au fond de la mer par le biais d'une articulation flexible, et relié à une dite conduite reposant au fond de la mer, et l'extrémité supérieure est tendue par un flotteur immergé en sub-surface auquel elle est reliée, et

- une conduite de liaison, en général une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant.

On connaît également des liaisons fond-surface réalisées en remontant de manière continue jusqu'en sub-surface des conduites résistantes et rigides constituées d'éléments tubulaires en acier de forte épaisseur soudés ou vissés entre eux, en configuration de chaînette avec une courbure continûment variable dans toute leur longueur en suspension, communément appelés « Steel Catenary Riser » (SCR) signifiant « riser en acier en forme de chaînette » et aussi communément appelés « conduite rigide du type caténaire » ou « riser du type SCR ». Une telle conduite caténaire peut remonter jusqu'au support flottant en surface ou seulement jusqu'à un flotteur en sub-surface qui tensionne son extrémité supérieure, laquelle extrémité supérieure est alors reliée à un support flottant par une conduite de liaison flexible plongeante.

On connait également des liaisons fond-surfaces permettant de relier un support flottant à des conduites ou installations au fond de la mer entièrement constitué de conduites flexibles, notamment dans le cas où la profondeur d'eau n'est pas très importante, par exemple 300 à 750m, voire 1000m et où les têtes de puits ou les équipements sous-marins ne sont pas très éloignés dudit support flottant.

La présente invention concerne des moyens de support de conduites flexibles d'installation de liaison fond/surface multiples comprenant des conduites flexibles multiples disposées sur au moins 2 niveaux en hauteur.

On rappelle qu'on entend ici par « conduite flexible » les conduites connues sous la dénomination « flexibles », bien connues de l'homme de l'art et qui ont été décrites dans les documents normatifs publiés par l'American Petroleum Institute (API), plus particulièrement sous les références API 17J et API RP 17 B. De tels flexibles sont notamment fabriqués et commercialisés par la Société TECHNIP-COFLEXIP France. Ces conduites flexibles comportent en général des couches d'étanchéité internes en matériaux thermoplastiques associées à des couches résistantes à la pression interne à la conduite, en général en acier ou en matériaux composites réalisés sous forme de bandes spiralées, jointives à l'intérieur de la conduite thermoplastique pour résister à la pression interne d'éclatement et complétés par des armatures externes au-dessus de la couche tubulaire thermoplastique également sous forme de bandes spiralées jointives, mais avec un pas plus long, c'est-à-dire un angle d'inclinaison de l'hélice inférieur, notamment de 15° à 55°.

Dans certains développements de champs, on relie plusieurs têtes de puits en parallèle grâce à une pluralité de liaison fond-surface rejoignant un même support flottant Dans ce cas, chacune desdites liaisons fond-surface doit être maintenue écartée de ses voisines immédiates pour éviter toute interférence et tout choc, non seulement au niveau des flotteurs, mais aussi au niveau des conduites flexibles et des câbles électriques et autres lignes flexibles tel que des câbles électriques ou des ombilicaux de transfert de signaux d'information assurant liaison avec ledit support flottant, lorsque lesdites conduites flexibles sont soumises aux effets du courant, et que ledit support flottant est lui soumis de plus à la houle, au vent et au courant.

Dans certains développements de champs, chacune des tête de puits est reliée individuellement au dit support flottant et on se retrouve alors avec une très grande quantité de liaisons fond-surface que l'on ne sait alors plus installer car la longueur du bordé du support est limitée et n'accepte de ce fait qu'un nombre limité de liaisons fond-surface.

On cherche à mettre en oeuvre un maximum de liaisons fond-surface à partir d'un même support flottant pour optimiser l'exploitation des champs pétroliers. C'est pourquoi on a proposé différents systèmes pouvant associer plusieurs risers verticaux ensemble afin de réduire l'encombrement du champ d'exploitation et pouvoir mettre en oeuvre un plus grand nombre de liaisons fond-surface reliés à un même support flottant. Typiquement il est nécessaire de pouvoir installer jusqu'à 30, voire 40 liaisons fond- surface à partir d'un même support flottant.

Dans WO 02/66786, WO 02/103153 et WO 2011/061422 au nom de la demanderesse, on a décrit des tours-hybrides à risers et conduites flexibles multiples disposées en éventails permettant d'associer un grand nombre de liaisons à un même support flottant, en dépit du problème de l'interférence des mouvements desdits risers qui sont soumis au même mouvement que leur flotteur de tensionnement en tête sous l'effet des déplacements du support flottant en surface soumis à la houle, au vent et aux courants.

Dans ces installations, on a proposé de disposer 2 conduites flexibles superposées ou disposées cote à cote entre le support flottant et les extrémités supérieures de riser ou SCR, les 2 conduites flexibles étant guidées en subsurface par respectivement 2 goulottes fixées de façon superposée ou décalée latéralement à un flotteur de tensionnement d'un troisième riser disposé plus proche du support flottant que les 2 premiers risers, chaque dite goulotte délimitant ainsi 2 portions de conduite flexible en chainette double plongeante de part et d'autre de la goulotte. Cette configuration présente l'avantage de pouvoir acheminer la conduite flexible jusqu'à l'extrémité supérieure du riser relativement éloigné du support flottant sans que le point bas desdites portions de conduite de chainette double plongeante ne soit trop profond.

Lorsqu'on met en oeuvre une multiplicité de liaisons fond-surface constituées exclusivement de conduites flexibles, il est nécessaire également d'espacer les différentes liaisons les unes par rapport aux autres ceci pour au moins les raisons suivantes.

Tout d'abord, les conduites flexibles sont fragiles au niveau de leur gaine externe et l'on doit impérativement les empêcher de se heurter les unes aux autres.

D'autre part, les conduites flexibles sont mise en oeuvre en passant par des éléments de guidage en forme d'arche dénommées goulottes définissant une surface rigide d'appui de forme incurvée convexe explicité ci-après, pour délimiter 2 portions de conduites flexibles comprenant une première portion de conduite flexible en configuration de chainette double plongeante entre support flottant et ladite goulotte et une deuxième portion de conduite flexible en configuration de chainette simple entre ladite goulotte et le point de contact et de tangence de ladite conduite flexible avec le fond de la mer.

Ces éléments de guidage en forme d'arche dénommés goulottes sont bien connus de l'homme de l'art ; ils présentent :

- une section longitudinale de forme incurvée en section dans le plan longitudinal vertical axial de la goulotte, de préférence une section de forme circulaire à concavité tournée vers le fond de la mer et une surface extérieure convexe sur la quelle est disposé la conduite, et

- une section transversale dans le plan vertical perpendiculaire au plan longitudinal axial vertical de la goulotte, présentant une forme avec un fond incurvé de préférence circulaire à concavité tournée vers le haut constitué de ladite surface externe supérieure encadrée par des rebords latéraux longitudinaux assurant le maintien et guidage de la conduite dans la direction longitudinale entre lesdits rebords.

De façon connue, le rayon de courbure de la courbure longitudinale à concavité tournée vers le bas est supérieur au rayon de courbure minimale de la conduite passant par ladite goulotte.

Une telle goulotte permet de conférer à la portion de conduite flexible qu'elle soutient une courbure contrôlée pour éviter une courbure excessive qui dégraderait irrémédiablement ladite conduite.

La fonction de ces goulottes et dispositions de conduites flexibles est de créer une courbe en chainette double plongeante en amont de la goulotte entre le support flottant et la goulotte, afin d'éviter ou de réduire le plus possible les sollicitations et déplacements des conduites flexibles au niveau de leurs points de contact avec le sol marin lesquelles déstructurent le sol marin en créant des tranchées et fragilisent la conduite en raison de flexions alternées dans la zone du point de contact, obligeant à en renforcer sa structure et/ou à protéger le sol marin. Les sollicitations et déplacements du point de contact de la conduite flexible avec le sol marin sont effectivement réduits du fait que les sollicitations et déplacements de conduites sont amortis par la première portion de conduite flexible en forme de chainette double plongeante créée par le passage de la conduite sur ladite goulotte, cette première portion étant plus sollicitée pour absorber les déplacements horizontaux du support flottant que la deuxième portion de conduite flexible en chainette simple.

Une dite ligne flexible sous-marine suspendue à ses deux extrémités prend de par son propre poids la forme d'une courbe dite en chaînette double plongeante, connue de l'homme de l'art, c'est-à-dire descendant en configuration de chainette jusqu'à un point bas de tangente horizontale (voir ci-après) pour remonter ensuite jusqu'audit support flottant, laquelle chaînette plongeante autorise des déplacements importants de ses extrémités absorbés par les déformations de la conduite flexible, notamment la montée ou la descente dudit point bas de la chaînette plongeante.

On rappelle que la portion de conduite flexible entre une extrémité à laquelle elle est suspendue et le point bas de tangence horizontal à savoir dans le cas de ladite deuxième portion de conduite flexible le point de contact au fond de la mer, adopte une courbe géométrique formée par une portion de conduite de poids uniforme en suspension soumise à la gravité, appelée "chaînette" est une fonction mathématique de type cosinus hyperbolique Coshx = (ex + e-x)/2, reliant l'abscisse et l'ordonnée d'un point quelconque de la courbe selon les formules suivantes :

$$y = R_0(\cosh(x/R_0)^{-1})$$

$$R = R_0.(Y/R_0 + 1)^2$$

dans lesquelles :

- x représente la distance dans la direction horizontale entre ledit point de contact et un point M de la courbe,

- y représente l'altitude du point M (x et y sont donc les abscisses et ordonnées d'un point M de la courbe par rapport à un repère orthonormé dont l'origine est audit point de contact),

- $R_0$ représente le rayon de courbure au dit point de contact, c'est à dire au point de tangence horizontale,

- R représente le rayon de courbure au point M (x, y).

Ainsi, la courbure varie le long de la chaînette depuis l'extrémité supérieure où son rayon de courbure a une valeur maximale Rmax, jusqu'au point de contact avec le sol où son rayon de courbure a une valeur minimale Rmin (ou $R_0$ dans la formule ci-dessus). Sous l'effet des vagues, du vent et du courant, le support de surface se déplace latéralement et verticalement, ce qui a pour effet de soulever ou de reposer la conduite en forme de chaînette, au niveau du fond de la mer.

Dans le cas d'une liaison fond-surface par chaînette simple, la portion la plus critique de la chaînette se situe dans la portion proche du point de contact et, la plus grande partie des efforts dans cette partie basse de la chaînette sont en fait engendrés par les mouvements propres du support flottant et par les excitations qui surviennent dans la partie haute de la chaînette soumise au courant et à la houle, l'ensemble de ces excitations se propageant alors mécaniquement tout le long de la conduite jusqu'au pied de chaînette.

La fonction essentielle de la première portion de chaînette double plongeante de conduite flexible en amont de la goulotte est donc, plus précisément d'absorber, au moins en partie, les mouvements de la conduite et/ou les mouvements des supports flottants auquel ladite ligne flexible est reliée, en découplant mécaniquement les mouvements respectifs de ladite deuxième portion de conduite flexible en chainette simple et dudit support flottant. Mais, une autre fonction est aussi de réduire les efforts de traction exercés par ladite deuxième portion de conduite flexible, sur l'équipement marin et/ou l'extrémité de la conduite reposant au fond de la mer auquel elle est reliée, le cas échéant.

Dans la technique antérieure, ces goulottes de support intermédiaire desdites conduites flexibles sont maintenues en sub-surface à une certaine profondeur par des flotteurs supportant ou auquel sont suspendues chacune des goulottes. Mais, ces flotteurs sont soumis à des déplacements importants ce qui requiert de prévoir une distance suffisante entre les différents flotteurs pour éviter que ceux-ci ne viennent se heurter les uns contre les autres.

Dans WO 00/31372 et EP 0 251 488, on décrit des pluralités de liaisons fond-surface dans lesquelles des conduites flexibles s'étendent depuis un support flottant jusqu'au fond de la mer en passant par une pluralité de goulottes toutes disposées à une même hauteur côte à côte décalées latéralement, lesdites goulottes étant supportées par une structure encombrante reposant au fond de la mer ou par une structure encombrante suspendue à des flotteurs et ancrée au fond de la mer.

Ces contraintes impliquent un étalement de la zone d'exploitation et une limitation du nombre de liaisons fond-surface flexibles pouvant être reliées sur un même support flottant, au niveau des bordés, pour éviter les interférences entre les différentes liaisons flexibles et les différents flotteurs.

C'est pourquoi on cherche à fournir une installation apte à exploiter depuis un même support flottant une pluralité de liaisons fond-surface de type flexible d'encombrement et mouvement réduits et qui soit aussi plus simple à poser et pouvant être fabriquée en mer depuis un navire de pose de conduite.

Un but de la présente invention est donc de fournir une installation d'une grande quantité de liaisons fond-surface flexibles permettant de relier un support flottant avec une pluralité de têtes de puits et/ou d'installations sous-marines installées au fond de la mer, notamment à moyenne ou grande profondeur, c'est-à-dire au-delà de 300m de profondeur d'eau, voire jusqu'au-delà de 500-1000m de profondeur.

Plus particulièrement encore, le problème posé selon la présente invention est donc de fournir une installation avec une multiplicité de liaisons fond-surface de conduite flexible à partir d'un même support flottant, dont les procédés de pose et de mise en place de l'installation permettent à la fois :

- de réduire la distance d'implantation entre les différentes liaisons fond-surface flexibles, c'est-à-dire permettent d'installer un grand nombre de liaisons fond-surface flexibles dans un espace le plus réduit possible ou en d'autres termes avec une emprise au sol réduite, ceci afin, entre autre, d'augmenter le nombre de liaisons fond-surface qu'il est possible d'installer le long du bordé d'un FPSO ou d'une plateforme, sans que lesdites liaisons fond-surface n'interfèrent entre elles, et,

- une fabrication et mise en place aisée par fabrication et pose séquentielle des différentes conduites à partir d'un navire de pose en surface, et enfin

- d'optimiser la mise en oeuvre des moyens de flottabilité dans le cas d'une mise en place étalée dans le temps sur une longue période de temps entre la mise en place des différentes liaisons fond-surface flexibles et ce, sans qu'il soit nécessaire de connaître au départ le nombre de liaisons qui sont à poser, ni leurs caractéristiques en termes de dimensions, et de poids unitaire.

En effet, lors de la phase d'ingénierie du développement d'un champ pétrolifère, le réservoir de pétrole n'est connu à ce stade que de manière incomplète, la production à plein régime impose alors bien souvent de reconsidérer, au bout de quelques années, les schémas initiaux de production et l'organisation des équipements associés. Ainsi, lors de l'installation du système initial, le nombre de liaisons fond-surface et leur organisation est défini par rapport à des besoins estimés, lesdits besoins étant de manière quasi-systématique revus à la hausse après la mise en production du champ, soit pour la récupération du pétrole brut, soit pour la nécessité d'injecter davantage d'eau dans le réservoir, soit encore pour récupérer ou réinjecter davantage de gaz. Au fur et à mesure de l'épuisement du réservoir, on est en général amené à forer de nouveaux puits pour réinjecter de l'eau ou du gaz, ou encore à forer des puits de production en de nouveaux endroits du champ, de manière à augmenter le taux de récupération global, ce qui complique d'autant l'ensemble des liaisons fond-surface reliées au bordé du FPSO.

Un autre problème de la présente invention est aussi de fournir une installation de liaisons fond-surface flexibles d'une grande résistance et d'un faible coût, et dont les procédés de fabrication et mise en place des différents éléments constitutifs soient simplifié et également d'un faible coût, et puisse être réalisé en mer depuis un navire de pose.

Un autre but de la présente invention est de fournir une installation avec un nombre réduit de flotteur de support ou tensionnement desdites conduites flexibles notamment au niveau des goulottes intermédiaires.

Pour ce faire la présente invention fournit une installation de liaisons fond-surface entre un même support flottant et le fond de la mer, comprenant une pluralité de lignes flexibles comprenant des conduites flexibles s'étendant depuis ledit support flottant et le fond de la mer où elles sont connectées à des têtes de puits, équipements ou extrémités de conduites sous-marines reposant au fond de la mer de ladite installation, lesdites lignes flexibles étant supportées par respectivement une pluralité d'éléments de support et guidage en forme d'arche dénommés goulottes délimitant chacune deux portions de conduite comprenant une première portion de ligne flexible en configuration de chainette double plongeante entre le support flottant et ladite goulotte et une deuxième portion de ligne flexible en configuration de chainette simple entre ladite goulotte et le point de contact de la conduite flexible au fond de la mer. Selon la présente invention, ladite installation comprend au moins une structure de support de goulottes comprenant une partie inférieure formant embase reposant et/ou ancrée ou enfoncée au fond de la mer et une partie supérieure supportant au moins deux goulottes inférieure et respectivement supérieure disposées à des hauteurs différentes de telle sorte que le point bas de la chainette double plongeante de la première portion de ligne flexible passant par la goulotte inférieure est situé au-dessous du point bas de la chainette double plongeante de ladite première portion de ligne flexible passant par la goulotte supérieure.

Cette configuration permet que le point de contact avec le sol marin de la ligne flexible passant par la goulotte inférieure soit plus proche de ladite embase que le point de contact avec le sol marin de la ligne flexible passant par la goulotte supérieure.

Les avantages de l'installation selon la présente invention sont notamment les suivants :

- la mise en oeuvre d'une structure de support de goulottes supportant une pluralité de goulottes permet de réduire relativement le nombre de flotteurs conformément au but de la présente invention, et

- la disposition des goulottes et des conduites flexibles avec leur point bas de tangence horizontale de la chainette double plongeante à des hauteurs différentes d'une part et, le cas échéant, la disposition des points de contact avec le sol de conduites flexibles à des distances différentes, contribuent à réduire voire éliminer les risques de contact et choc entre lesdites conduites flexibles notamment de leur dite première portion de conduite en chainette plongeante.

On entend ici par « support flottant » aussi bien une barge ou navire qu'une plateforme semi-submersible du type décrit ci-dessus.

On comprend que ladite partie supérieure de la structure support, supportant ou sur laquelle sont fixées lesdites goulottes selon la présente invention, est une structure rigide autre qu'un flotteur.

Plus particulièrement, ladite partie supérieure de ladite structure de support de goulottes comprend au moins deux éléments de support rigides inférieure et respectivement supérieure disposés à des hauteurs différentes et supportant chacun une pluralité de goulottes décalées latéralement dans une direction (YY') dans un plan vertical perpendiculaire au plan axial vertical de ladite structure de support et desdits éléments de support rigides et/ou perpendiculaire aux plans axiaux longitudinaux verticaux des dites goulottes, de préférence parallèles entre eux, lesdites goulottes étant de préférence disposées symétriquement par rapport à un plan axial vertical de ladite structure de support et desdits éléments de support rigides.

Ce mode de réalisation est particulièrement avantageux dans la mesure où il est possible à partir de ladite structure de support de goulottes d'écarter angulairement d'un angle $\alpha_2$ de deuxième portion de conduite flexible adjacente passant par 2 goulottes adjacentes supportées par un même élément de support rigide inférieur ou supérieur, d'un angle $\alpha_2$ supérieur à l'angle $\alpha_1$ entre les 2 premières portions de conduites flexibles correspondantes des 2 mêmes conduites flexibles.

Il est donc ainsi possible d'étendre le spectre angulaire de l'éventail desdites conduites flexibles à partir de ladite structure support et ainsi d'étendre la zone géographique d'implantation des têtes de puits ou extrémités de conduites sous-marines pouvant être reliées par lesdites conduites flexibles à un même support flottant.

En conséquence, plus particulièrement, les deux deuxièmes portions de lignes flexibles de deux lignes flexibles passant par deux goulottes adjacentes supportées par un même élément de support rigide décalées latéralement sont disposées angulairement l'une par rapport à l'autre d'un angle ($\alpha_2$) supérieur à l'angle ($\alpha_1$) des deux première portions de lignes flexibles des mêmes deux lignes flexibles.

De préférence, une installation de liaison fond-surface selon l'invention, on comprend qu'elle comprend au moins deux dites structures de support de goulottes dont lesdits plans axiaux verticaux sont disposés angulairement $\alpha$.

Plus particulièrement, le nombre de goulottes supportées par un même élément de support rigide de goulotte inférieure ou supérieure peut-être plus particulièrement de 10 à 30.

Dans un mode de réalisation particulier, une dite conduite flexible est maintenue dans une dite goulotte par des moyens de retenue et/ou des moyens d'accrochage.

Cette caractéristique vise à stabiliser la conduite flexible et à favoriser les sollicitations et déplacements dans ladite première portion de conduite flexible.

Plus particulièrement, lesdits moyens de retenue ou moyens d'accrochage sont constitués par un dispositif tubulaire formant un anneau pré positionné autour de ladite conduite à une distance prédéterminée par rapport à l'extrémité de la conduite fixée au support flottant, ledit anneau étant apte à être bloqué et/ou verrouillé dans ladite goulotte, de préférence ladite goulotte comportant une première partie de canal interne contenant ou étant apte à contenir une dite conduite flexible mais ne pouvant contenir ladite conduite entourée dudit anneau, ladite première partie de goulotte étant située du côté de la goulotte le plus proche du support flottant, la largeur, notamment le diamètre, en section transversale du canal interne de ladite première partie de goulotte étant plus petite que celle de la section transversale du canal interne d'une deuxième partie de goulotte disposée du côté de la goulotte le plus éloigné du support flottant, le canal interne de ladite deuxième partie de goulotte interne contenant ou étant apte à contenir une dite conduite flexible entourée dudit anneau, ledit anneau étant retenu par un épaulement au niveau de la zone de variation de largeur, de préférence variation discontinue de largeur, entre les deux canaux internes des deux première et deuxième parties de goulotte.

Ledit anneau peut être formé de deux demi anneaux à section semi circulaire appliqués contre la conduite et assemblés entre eux, par exemple par boulonnage.

On comprend que le positionnement dudit anneau est déterminé par la longueur de première portion de conduite flexible souhaitée en fonction de la hauteur du point bas de ladite première portion de conduite flexible en double chainette plongeante, laquelle dépend aussi de la hauteur de la goulotte et sa distance par rapport au support flottant.

Dans une première variante de réalisation particulière, les dits éléments de support rigides de goulottes forment des poutres horizontales. Les goulottes supportées par un même élément de support rigide sont disposées à une même hauteur.

Dans une autre variante de réalisation, les goulottes supportées par un même élément de support rigide sont disposées à des hauteurs différentes, de préférence ledit élément de support rigide définissant une surface de support de goulottes plane et inclinée.

Dans tous les cas, de préférence, les points bas de deux premières portions de lignes flexibles passant par des goulottes adjacentes supportées par un même élément de support rigide sont à des hauteurs différentes.

Dans un mode de réalisation préféré, ladite structure de support de goulottes est une structure rigide comportant une tour rigide s'élevant au-dessus d'une dite embase reposant et/ou ancrée au fond de la mer à laquelle elle est fixée rigidement. Par « tour rigide », on entend que ladite partie inférieure formant embase et ladite partie supérieure de la structure support supportant lesdites goulottes sont reliées par une structure rigide.

Plus particulièrement, ladite embase est une structure métallique en treillis s'étendant horizontalement reposant au fond de la mer et ladite tour rigide est une structure métallique en treillis s'élevant verticalement supportant au moins deux éléments de support rigides supérieur et inférieur formant des poutres s'étendant, de préférence symétriquement, de part et d'autre de la tour sur au moins deux niveaux en hauteur, poutres au-dessus desquelles sont fixées des dites goulottes, ladite tour étant fixée à ladite structure métallique en treillis de ladite embase par des éléments de liaison et de renfort rigides inclinés.

On comprend que la structure métallique en treillis de ladite embase une distance suffisante pour faire contrepoids suffisant pour stabiliser la tour.

Dans ce mode de réalisation de la structure de support rigide, la symétrie de positionnement des goulottes et des conduites flexibles et plus généralement de la structure de support elle-même par rapport à un dit plan axial longitudinal vertical vise à ce que ladite structure supporte essentiellement des efforts en compression, les efforts en flexion étant équilibrés de part et d'autre de la tour rigide verticale.

Dans une autre variante de réalisation, ladite structure de support de goulottes est une structure articulée comportant au moins deux éléments de support rigides supérieur et inférieur formant des poutres disposées l'une au-dessus de l'autre et reliées l'une à l'autre par des premiers éléments de liaison souples tels que des premiers haubans, ledit élément de support de goulottes inférieur étant relié à ladite embase par des deuxièmes éléments de liaison souples tels que des deuxièmes haubans, lesdits éléments de support rigides supérieur et inférieur étant maintenus au-dessus l'un de l'autre et au-dessus d'une dite embase par au moins un élément de flottabilité immergé fixé à au moins ledit élément de support de goulottes supérieur apte à tensionner lesdits premiers et deuxièmes haubans, ladite embase étant de préférence enfoncée au fond de la mer.

Plus particulièrement, ledit élément de support rigide supérieur est suspendu à un flotteur supérieur immergé auquel il est relié par des troisièmes éléments de liaison souples tels que des élingues, et de préférence ledit dit élément de support rigide supérieur est supporté par un flotteur inférieur sur lequel il est fixé.

Dans les 2 modes de réalisations de structure de support rigide, on préfère que le plan axial longitudinal vertical des goulottes supérieure et inférieure les plus proches soient coaxiaux et coplanaires pour les 2 goulottes pour éviter ou réduire des efforts de flexion sur ladite structure de support.

Dans la variante de réalisation dans laquelle la structure de support de goulottes est une structure articulée, la deuxième portion de conduite flexible en chainette simple est moins stabilisée que dans le cas d'une structure de support rigide mais ces sollicitations et déplacements notamment au niveau du point de contact avec le sol marin sont néanmoins considérablement réduits du fait du tensionnement de ladite structure de support par lesdits flotteurs.

Pour faciliter la pose des conduites flexibles à partir d'un navire de pose comme explicité plus loin dans la description, ledit élément de support de goulottes supérieur ou les extrémités des goulottes qu'il supporte comprennent un déflecteur dont le profil est apte à éviter d'endommager la portion de conduite flexible pouvant rentrer en contact avec ledit déflecteur en cours de pose de la conduite sur une dite goulotte inférieure.

De préférence encore, ladite goulotte supérieure est à une hauteur au-dessus de la goulotte inférieure la plus proche telle que le segment passant par l'extrémité longitudinale de la goulotte supérieure et le sommet du fond de la goulotte inférieure forme un angle $\alpha 3$ d'au moins 30°, de préférence au moins 45° par rapport à l'horizontale.

Le sommet du fond de la goulotte est le point situé à mi longueur curviligne de la goulotte.

Ladite structure support peut également supporter des goulottes servant au guidage et au support de lignes flexibles autres que lesdites conduites flexibles et donc de plus petit diamètre.

D'autres caractéristiques et avantages de la présente invention apparaîtront à la lumière de la description détaillée qui va suivre, en référence aux figures suivantes dans lesquelles :

- la figure 1 est une vue de côté d'une installation de liaisons fond-surface selon l'invention entre une plateforme flottante ancrée 2 et une structure de support métallique 4 supportant deux séries de goulottes en forme d'arches 3, 3a-3b, reposant sur le fond de la mer 5,

- la figure 2 est une vue de côté d'une installation de la figure 1 illustrant les déformations des conduites flexibles 1 en fonction de l'excursion de ladite plateforme flottante ancrée, au plus loin 1b et au plus près la par rapport à ladite structure de support 4,

- la figure 3 est une vue de dessus d'une installation du type de celle de la figure 1 mais avec deux structures de support 4, illustrant la disposition en éventail d'une pluralité de liaisons fond-surface flexibles entre une plateforme 2 et deux structures de support métalliques 4 reposant sur le fond de la mer,

- la figure 4 est une vue de côté d'une installation de liaisons fond-surface selon la figure 1 entre une plateforme flottante ancrée et deux éléments de support rigides 4-2a, 4-2b, supportant respectivement deux séries de goulottes en forme d'arches, lesdites éléments de support rigides étant reliés entre eux par une première série de haubans, et reliés à une fondation 4-1 reposant sur le fond de la mer 5 par une seconde série de haubans, l'ensemble étant tensionné vers le haut au moyen d'un flotteur 4-4a,

- la figure 5A illustre en vue de côté la première étape de l'installation d'une conduite flexible sur la goulotte inférieure 3b,

- la figure 5B illustre en vue de côté les deuxième, troisième et quatrième étapes de l'installation d'une dite conduite flexible sur la goulotte inférieure 3b,

- la figure 6A est une vue de dessus d'une goulotte 3 détaillant les sections transversales respectives d'une partie avant 3-1 et d'une partie arrière 3-2 de la goulotte dont les canaux internes 3-4 présentent des diamètres différents, donc des largeurs différentes,

- la figure 6B est une vue de dessus d'une conduite flexible équipée d'un anneau 7 rapporté destiné au blocage de ladite conduite flexible au sein de ladite goulotte de la figure 6A,

- la figure 6C est une vue de dessus de la conduite flexible de la figure 6B installée dans la goulotte de la figure 6A, un verrou 8 étant en position ouverte,

- la figure 6D est une vue de dessus relative à la figure 6C, le verrou de blocage 8 de l'anneau 7 rapporté étant en position fermée,

- la figure 7A est une vue en coupe verticale transversale de la conduite 1 avec deux portions semi-tubulaires 7a, 7b formant ledit anneau 7 une fois appliquées contre la conduite 1 et le verrou 8 en position d'ouverture, la figure 7B montre le verrou 8 en position fermé (dans l'absence de conduites et d'anneau 7 à l'intérieur),

- la figure 8A est une section verticale transversale au niveau du sommet des goulottes supérieures 3a d'une structure support rigide 4 comportant deux poutres horizontales 4-2a et 4-2b, supportant une pluralité de goulottes supérieures 3a et goulottes inférieures 3b, montrant en pointillés les premières portions de conduites flexibles 1-1 avec leur point bas 1-1a, et montrant en pointillés les goulottes inférieures 3b,

- la figure 8B est une vue similaire à la figure 8A, mais la coupe verticale transversale étant au niveau des sommets des goulottes inférieures 3b et montrant en pointillés les premières portions de lignes flexibles 1-1 et en pointillés les goulottes supérieures 3a,

- la figure 9 est une vue de côté d'une structure de support dans laquelle les goulottes supérieures sont décalées, par rapport aux goulottes inférieures, vers le support flottant,

- la figure 10 est une variante de réalisation d'une structure de support de goulottes 4, dans lesquelles les éléments de support rigide supérieur 4-2a et inférieur 4-2b sont des poutres inclinés symétriquement par rapport à la tour centrale verticale 4-2c.

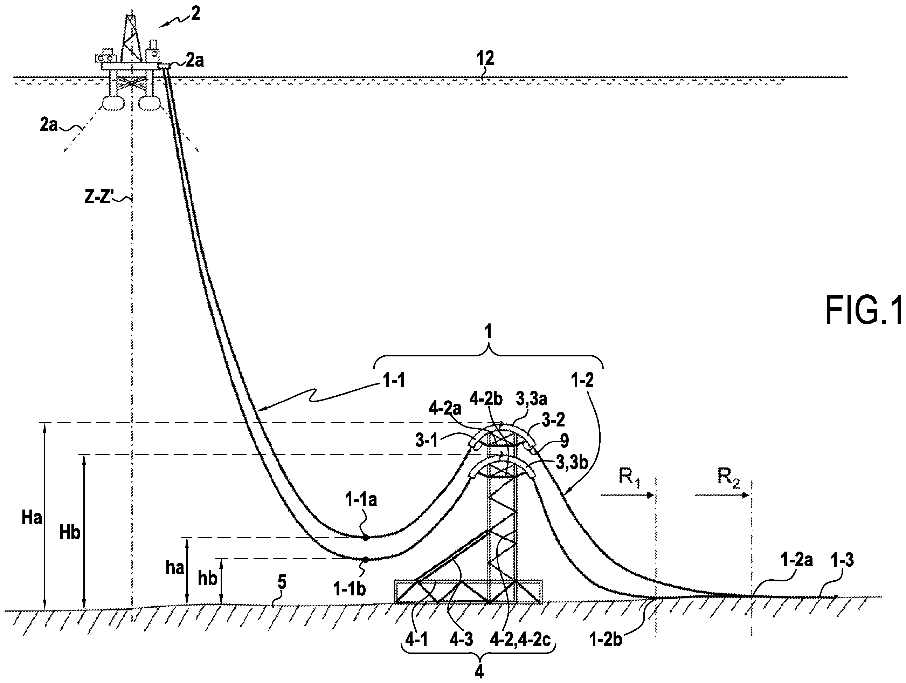

Sur la figure 1 on a représenté une installation de liaisons fond-surface comprenant deux conduites flexibles 1 reliées à une extrémité 2a à une plateforme flottante semi-submersible 2, maintenue en position par des lignes d'ancrage 2a, l'autre extrémité desdites conduites flexibles reposant en 1-3 au fond de la mer 5. Les deux conduites flexibles 1 s'étendent à des hauteurs différentes et arrivent en contact avec le sol marin 5 à des points de contact 1-2a et 1-2b à des distances différentes de l'axe ZZ' du support flottant 2.

L'installation de liaisons fond-surface comporte une structure de support rigide 4, comprenant une tour verticale rigide 4-2c, constituée d'une structure métallique en treillis, supportant à son sommet deux éléments de support rigides supérieur 4-2a et inférieur 4-2b formant des poutres horizontales, s'étendant symétriquement de part et d'autre de la tour 4-2c. Des goulottes supérieures 3a sont fixées par-dessus la poutre supérieure 4-2a et des goulottes inférieures 3b sont fixées par-dessus la poutre inférieure 4-2b. Les goulottes supérieures 3a et goulottes inférieures 3b sont toutes, de préférence, de même longueur et de même rayon de courbure et sont disposées parallèlement les unes aux autres, décalées latéralement dans la direction transversale YY' perpendiculaire à la direction longitudinale des goulottes XX'.

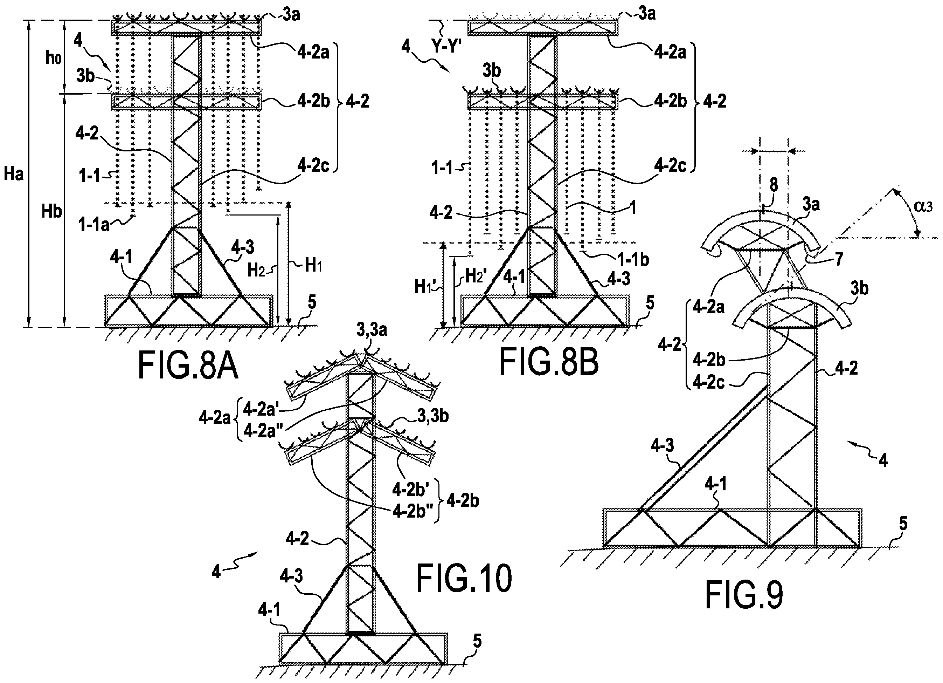

Sur les figures 1 à 3, les goulottes supérieures 3a et goulottes inférieures 3b d'une même structure support 4 sont superposées, c'est-à-dire ne sont pas décalées les unes par rapport aux autres dans la direction longitudinale XX' des goulottes, contrairement au mode de réalisation de la figure 9, où les goulottes inférieures 3b sont décalées vers l'avant ou en aval, c'est-à-dire légèrement plus éloignées du support flottant 2 par rapport aux goulottes supérieures 3a.

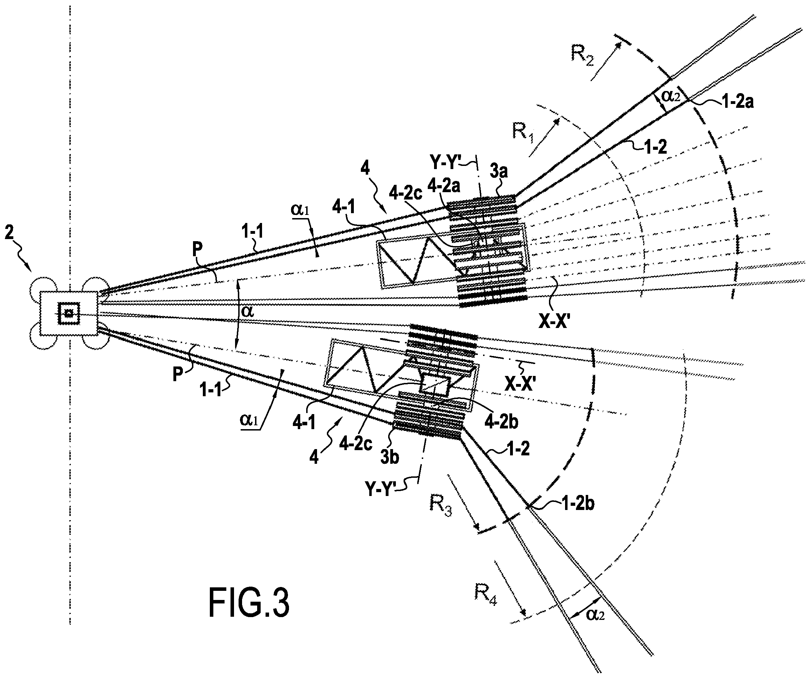

Sur la figure 3, on a représenté deux installations avec deux structures support 4 disposées à une distance différente du support flottant 2, mais ayant toutes les deux la même forme, l'une des deux structures, la plus proche du support flottant, étant montrée en coupe juste au-dessus de la poutre inférieure 4-2b et des goulottes inférieures 3b, tandis que l'autre structure support 4 la plus éloignée du support flottant 2 est montrée en vue de dessus au-dessus des goulottes et poutres supérieures 3a, 4-2a. Les deuxièmes portions de conduite flexible 1-2, passant par les goulottes supérieures 3a, ont un point de contact 1-2a avec le sol marin 5, situé sensiblement sur un cercle de rayon R2 (pour la structure support 4 de la figure 3 la plus éloignée du support flottant 2) ou R4 (pour la structure support 4 de la figure 3 la plus proche du support flottant 2). Le point de contact 1-2b des deuxièmes portions de conduites 1-2 passant par les goulottes inférieures 3b est également situé sensiblement sur un cercle de rayon R1 (pour la structure support 4 de la figure 3 la plus éloignée du support flottant 2) ou R3 (pour la structure support 4 de la figure 3 la plus proche du support flottant 2), avec R1 < R2 et R3 < R4.

Sur cette même figure 3, la poutre supérieure 4-2a supporte dix goulottes supérieures 3a, dont les sommets arrivent à une même hauteur Ha, comme représenté sur la figure 1, et sur lesquelles quatre conduites flexibles seulement sont disposées sur les deux goulottes aux extrémités latérales dans la direction YY' de la poutre supérieure 4-2a. La poutre inférieure 4-2b supporte neuf goulottes inférieures 3b à une même hauteur Hb sur lesquelles ont également été installées quatre conduites flexibles, à savoir deux conduites flexibles aux deux goulottes des deux extrémités dans la direction latérale YY' de la poutre.

Les différentes conduites flexibles 1, passant par les goulottes 3a et 3b, comprennent chacune une première portion de conduite flexible 1-1 en configuration de chainette double plongeante entre le support flottant 2 et ladite goulotte, et une deuxième portion de conduite flexible 1-2 en configuration de chainette simple entre ladite goulotte et le point de contact 1-2a et 1-2b de la conduite flexible ou 1-2a et 1-2b de la conduite flexible au fond de la mer.

Sur les figures 1, 2 et 4, le point bas 1-1a de la première portion de conduite 1-1 passant par la goulotte supérieure 3a est situé au-dessus du point bas 1-1b de la première portion de conduite 1-1 passant par la goulotte inférieure 3b, les deuxièmes portions de conduite flexible 1-2, passant par les goulottes supérieures 3a, ont un point de contact 1-2a avec le sol marin 5, situé sensiblement sur un cercle de rayon R2 (pour la structure support 4 de la figure 3 la plus éloignée du support flottant 2) ou R4 (pour la structure support 4 de la figure 3 la plus proche du support flottant 2). Le point de contact 1-2b des deuxièmes portions de conduites 1-2 passant par les goulottes inférieures 3b est également situé sensiblement sur un cercle de rayon R1 (pour la structure support 4 de la figure 3 la plus éloignée du support flottant 2) ou R3 (pour la structure support 4 de la figure 3 la plus proche du support flottant 2), avec R1 < R2 et R3 < R4.

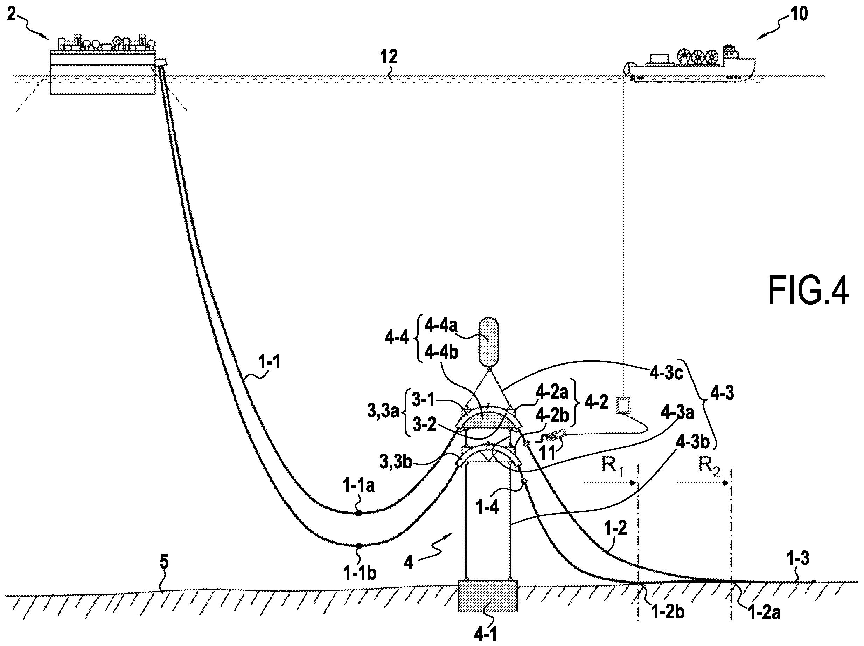

Sur les figures 1 à 3, on a représenté des conduites flexibles 1 continues depuis leur point d'accroche 2b sur la plateforme 2 jusqu'au-delà de leur point de contact 1-2a, 1-2b sur le sol marin dans la portion de conduite 1-3 reposant sur le fond de la mer 5. Toutefois, il est également possible que lesdites conduites flexibles soient constituées d'une pluralité de conduites flexibles raccordées les unes aux autres par des embouts intermédiaires de type bride 1-4 notamment ou autres moyens de raccordement, lesdits moyens de raccordement pouvant d'ailleurs être situés avantageusement en aval desdites goulottes comme représenté sur la figure 4.

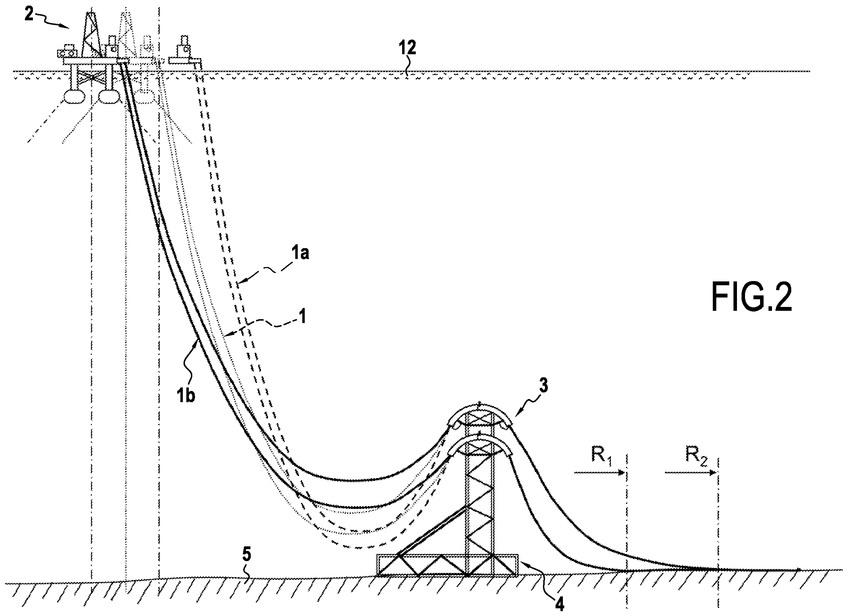

La plateforme 2 est soumise aux effets de la houle, du vent et du courant et de ce fait peut se déplacer dans toutes les directions. Le système d'ancrage 2a limitant les excursions de la plateforme 2 a tendance à la ramener dans la position neutre de la figure 1. Sur la figure 2 on a représenté en vue de côté les déformations des conduites flexibles 1, selon que la plate-forme se rapproche de la structure 4 (configuration 1a) ou s'en éloigne (configuration 1b). On notera que les deuxièmes portions de conduites flexibles 1-2 restent sensiblement fixes quelque soient les déplacements de la plateforme en surface comme explicité précédemment.

Du fait que les points bas 1-1a et 1-2b des deux premières portions de conduites 1-1 des deux conduites soient à des hauteurs différentes ha, hb d'une part, et que, d'autre part, deux deuxièmes portions de conduites 1-2 des deux conduites passant par les deux goulottes supérieures 3a et inférieures 3b soient également à des hauteurs différentes du fait qu'elles ont des points de contact 1-2a et 1-2b à des distances différentes de la structure 4, les portions 1-1 et 1-2 de conduite supérieures et inférieures en suspension ne peuvent pas interférer entre elles.

Ladite structure de support de goulotte 4 comprend une partie inférieure 4-1 servant d'embase, constituée d'une structure métallique en treillis s'étendant horizontalement reposant ou ancrée au fond de la mer sur une distance suffisante pour faire contrepoids et stabiliser la tour rigide 4-2c qui lui est fixée à sa base. La tour rigide 4-2c est une structure métallique en treillis fixée à sa base à la structure en treillis 4-1 formant embase et supportée par des éléments de liaison et de renfort rigides inclinés 4-3.

Sur la figure 3, les deux poutres horizontales 4-2a et 4-2b supportant les goulottes supérieures 3a et respectivement goulottes inférieures 3b, sont superposées et disposées à une même distance de l'axe ZZ' du support flottant 2. En revanche, sur la figure 9, les goulottes inférieures 3b sont décalées légèrement vers l'avant, c'est-à-dire à une plus grande distance de l'axe ZZ' du support flottant 2 que les goulottes supérieures 3a, afin de faciliter la pose d'une conduite flexible sur la goulotte inférieure 3b, comme explicité ci-après.

Sur les figures 8A et 8B, on montre que les goulottes 3a et 3b peuvent avoir des diamètres, ou des largeurs, en coupe transversale verticale variables adaptés aux diamètres des conduites ou lignes flexibles qui sont destinées à maintenir.

Sur la figure 8A, on montre que les différents points bas 1-1a des premières portions de conduites flexibles en amont des goulottes supérieures 3a sont disposées à des hauteurs variables de manières à ce que les points bas 1-1a de deux premières portions de conduites flexibles supportées par des goulottes supérieures 3a adjacentes supportées par la poutre supérieure 4-2a sont à des hauteurs différentes H1 et H2. Sur la figure 8B, les points bas 1-1b de deux premières portions de conduites flexibles 1-1 supportées par des goulottes inférieures 3b adjacentes sur la poutre inférieure 4-2b sont également à des hauteurs différentes H1' et H2'.

Sur les figures 3, 8A et 8B, les différentes conduites des différentes lignes flexibles assurant les liaisons flexibles fond-surface entre le support 2 et des équipements d'une même tête de puits sont regroupés par des goulottes supérieures 3a et inférieures 3b situées dans un même corridor angulaire le plus étroit possible de l'éventail de l'ensemble des conduites flexibles assurant la jonction entre le même support flottant 2 et une pluralité de têtes de puits. Ce regroupement de conduites flexibles, assurant la jonction d'une même tête de puits avec le support flottant, est rendu possible de par la pluralité de hauteurs des goulottes installées au moins sur deux niveaux d'une part, et, d'autre part, de par la possibilité d'installer les points bas 1-1a et 1-1b des premières portions de conduites à des hauteurs différentes d'une part, et, d'autre part, les points de contact 1-2a et 1-2b des deuxièmes portions de conduites avec le sol à des distances différentes de la structure support 4.

Sur la figure 10, on a représenté un deuxième mode de réalisation de structure support rigide, dans lequel les éléments de support de goulottes supérieures 4-2a et inférieures 4-2b sont constitués chacun de deux poutres rectilignes 4-2a'/4-2a" et 4-2b'/4-2b", inclinées symétriquement par rapport à la tour verticale centrale rigide 4-2c. Ce mode de réalisation présente l'intérêt additionnel que les différentes goulottes supérieures 3a et goulottes inférieures 3b peuvent être à des hauteurs différentes sur leurs poutres inclinées respectives, de sorte que la disposition des différents points bas 1-1a et 1-2b des premières portions de conduites flexibles 1-1 adjacentes peut être plus facilement disposé à des hauteurs différentes H1 et H2.

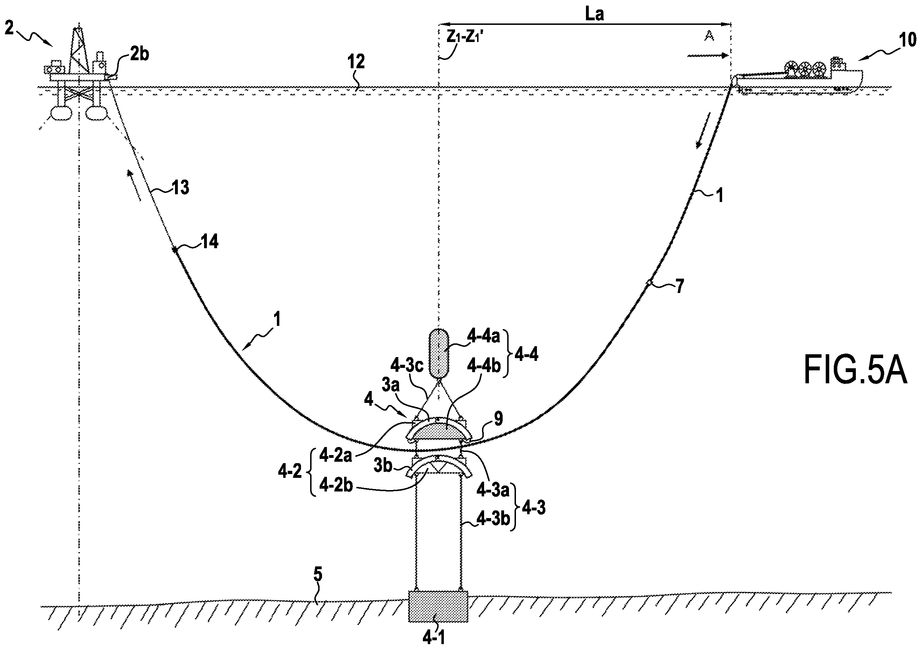

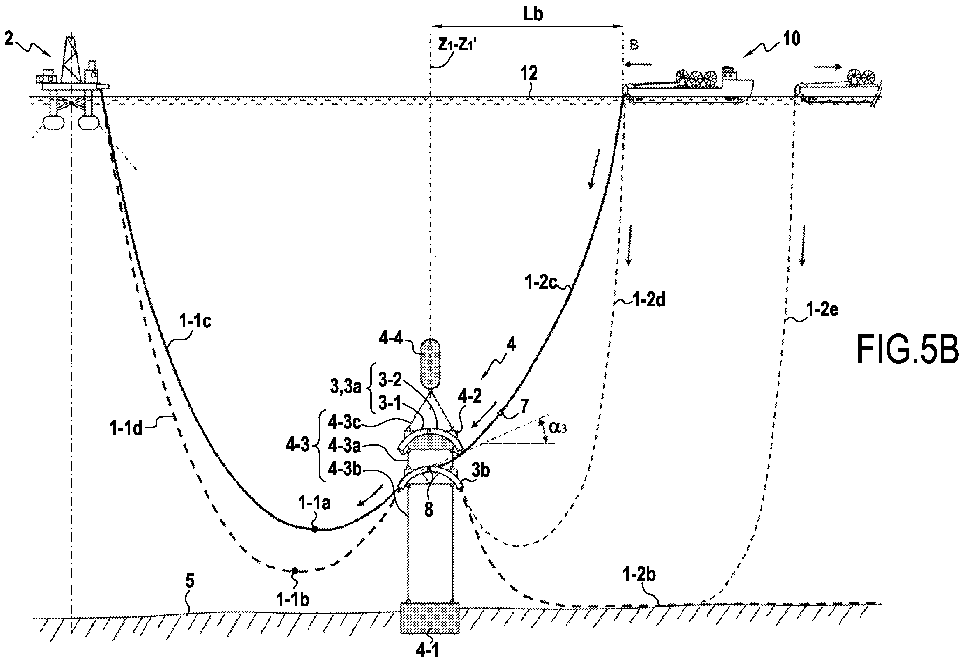

Sur les figures 4 et 5, ladite structure de support de goulottes 4 est une structure articulée comportant deux poutres horizontales supérieures 4-2a et inférieures 4-2b, constituées de structures métalliques en treillis, reliées entre elles par des premiers haubans 4-3a. L'ensemble des deux poutres 4-2a et 4-2b forme la partie supérieure de la structure support 4. La poutre inférieure 4-2b est reliée à une embase 4-1 enfoncée au fond de la mer 5 par des deuxièmes haubans 4-3b. La poutre supérieure 4-2a est suspendue à un flotteur supérieur immergé 4-4a, auquel elle est reliée par des élingues 4-3c. Le flotteur 4-4a assure le tensionnement des premiers et deuxièmes haubans 4-3a et 4-3b, de manière à les maintenir en position verticale et à assurer le maintien de la poutre supérieure 4-2a à une hauteur donnée Ha, au-dessus de la poutre inférieure 4-2b à une hauteur inférieure Hb, comme représenté sur la figure 1.

Les goulottes supérieures 3a, fixées à la poutre supérieure 4-2a, sont elles-mêmes supportées par des flotteurs additionnels 4-4b intégrées à ladite poutre pour compléter le tensionnement des premiers et deuxièmes haubans 4-3a et 4-3b.

De la même manière, on intègre avantageusement des éléments de flottabilité à la structure de la poutre inférieure 4-2b.

Les poutres supérieure 4-2a et inférieure 4-2b supportent, comme dans les figures 3 et 8, une pluralité de goulottes supérieures 3a et respectivement goulottes inférieures 3b.

Pour des profondeurs d'eau de 500 à 1000m, et pour une grande quantité de conduites flexibles, par exemple 18 ou 24 conduites flexibles, une structure de support rigide 4 selon le mode de réalisation des figures 1, 2 et 3 pourra mesurer de 100 à 150m de hauteur (Ha) et représenter un poids de plusieurs milliers de tonnes, par exemple 5 à 6000 tonnes. En revanche, une structure de support 4 de type articulé conformément aux figures 4 et 5, présente un poids considérablement diminué par rapport au poids de la structure rigide 4 des figures 1 à 3. Toutefois, les éléments de flottabilité 4-4a et 4-4b restent relativement plus coûteux qu'une construction en structure métallique en treillis.

Ainsi, le choix d'une solution de type structure rigide 4 telle que décrite en référence à la figure 1, ou d'une solution de structure de type flottant et articulé telle que décrite en référence à la figure 4, dépendra essentiellement des moyens et des coûts de préfabrication, de transport et d'installation disponibles : la construction, le transport et l'installation de structures unitaires de plusieurs milliers de tonnes requiert en effet des moyens considérables et spécifiques qui ne sont pas toujours disponibles dans certaines régions du monde.

Dans la configuration articulée de la figure 4, lorsque la plateforme 2 se déplace, comme représenté en référence à la figure 2, les éléments 4-1, 4-2a et 4-2b étant articulés entre eux, il en résulte un mouvement dans la même direction que ladite plateforme 2, mais fortement atténué, ce qui implique une déformation des deuxièmes portions de chaînette 1-2 dans le même sens que la déformation des premières portions de chaînette 1-1, et un déplacement des points de contact 1-2a et 1-2b dans une même direction, à savoir la direction opposée de celle de la plateforme 2 et la partie supérieure 4-2. Ainsi, chacune des variantes de structure de support rigide 4 de l'invention présente des avantages et des inconvénients par rapport à l'autre.

Sur cette même figure 4, on a représenté un navire d'installation 10 en surface 12 équipé d'un ROV 11 (sous-marin automatique d'intervention piloté depuis la surface), à proximité des goulottes supportant les conduites flexibles. On dispose avantageusement les niveaux de goulottes supérieures 3a et inférieurs 3b à une distance verticale h0 de 10 à 20m l'une de l'autre, de manière à ce que ledit ROV 11 puisse passer entre les deux niveaux de goulottes sans interférer avec les conduites flexibles pour intervenir le cas échéant.

Sur les figures 5A et 5B, on a représenté en vue de côté une installation d'une conduite flexible sur une goulotte inférieure 3b. Sur la figure 5A, le navire d'installation 10 se positionne à une distance La de l'axe vertical Z1Z1' de la structure de support 4, puis transfère de manière connue la conduite flexible vers la plateforme 2 en passant entre les goulottes supérieures 3a et les goulottes inférieures 3b.

En résumé, la liaison de l'extrémité 14 de la conduite flexible 1 en 2b sur un bordé de la plateforme 2 se réalise selon les étapes suivantes :

- étape 1 : un câble 13 est suspendu à la verticale depuis le navire de pose 10, lequel navire est positionné à proximité de l'axe Z1Z1' de la structure support 4 à une distance La réduite, et

- étape 2 : le ROV 11 saisit l'extrémité inférieure du câble 13 et la passe entre les deux goulottes 3a et 3b pour venir l'accrocher en 2b sur la plateforme 2, et

- étape 3 : le cas échéant, on remplace le câble 13 par un câble renforcé de traction, et

- étape 4 : on positionne le navire à la distance La de l'axe Z1Z1' et l'on accroche l'extrémité 14 d'une conduite flexible stockée sur le navire 10 à l'extrémité libre du câble 13, et

- étape 5 : on transfère l'extrémité 14 de la conduite 1 vers le support flottant 2 et on l'accroche en 2b sur un bordé 2.

Lorsque l'extrémité 14 de la conduite flexible est sécurisée à la plateforme 2, le navire d'installation 10 se rapproche de l'axe Z1Z1' et se trouve à la distance Lb < La comme détaillé sur la figure 5B. La conduite flexible se trouve alors en configuration 1-1c et 1-2c dans laquelle la portion supérieure en aval 1-2c vient buter contre un déflecteur 9 à l'extrémité de la partie avant 3-2 de la goulotte supérieure 3a. Seule la partie arrière 3-1 de la goulotte inférieure 3b supporte la conduite flexible 1, l'extrémité inférieure de la portion 1-2c de la conduite 1 ne reposant pas sur la partie avant 3-2 de la goulotte inférieure 3b.

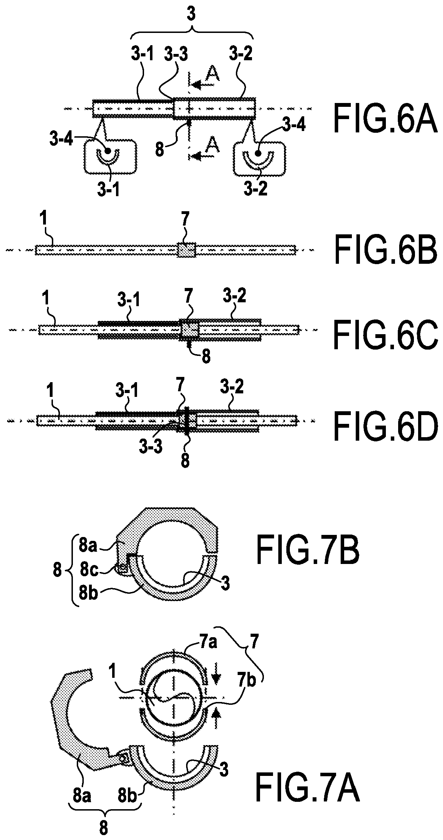

Les deux parties 3-1 et 3-2 de la goulotte 3 présentent, comme représenté sur les figures 6A à 6D, des canaux internes de largeur en section transversale différente, la partie 3-1 de goulotte, présentant un canal interne 3-4 de plus petite largeur que celle de la section transversale du canal interne 3-4 de la deuxième partie de goulotte 3-2, disposée du côté de la goulotte le plus éloigné du support flottant 2.

Le canal interne 3-4 de plus grande largeur de la deuxième partie de goulotte 3-2 est apte à contenir une conduite flexible entourée d'un anneau 7, tandis que le canal interne 3-4 de la première partie 3-1 de goulotte est apte à contenir la conduite flexible 1 et ne peut pas contenir la conduite entourée dudit anneau 7. Ainsi, l'anneau 7 est retenu par un épaulement 3-3 au niveau de la zone de variation discontinue de largeur entre les deux parties 3-1 et 3-2.

L'anneau 7 est constitué par exemple de deux demi-coquilles 7a et 7b semi-tubulaires, assemblées entre elles par des boulons de manière à venir en butée contre la conduite 1 à une position prédéterminée par rapport à son extrémité 14, comme représenté sur la figure 7A.

Au stade de la pose de la conduite 1 telle que représentée sur la figure 5B, l'anneau 7 se trouve à proximité du déflecteur 9 de l'extrémité de la partie avant 3-2 de la goulotte supérieure 3 en contact avec la portion de conduite 1-2c.

Du fait de l'écart de hauteur h0 entre la goulotte supérieure 3a et la goulotte inférieure 3b, on conserve un angle $\alpha3$ d'au moins 30°, de préférence environ 45° par rapport à l'horizontale du segment entre le point de contact de la conduite 1-2c avec le déflecteur 9 à l'extrémité de la portion 3-2 de la goulotte supérieure 3a et le sommet de la goulotte inférieure 3b correspondant à l'épaulement 3-3 entre les parties 3-1 et 3-2 de la goulotte inférieure 3b. Cet angle $\alpha3$ permet d'éviter une courbure excessive de la portion de conduite 1-2c et la présence des déflecteurs évite d'endommager la conduite flexible même en cas de contact insistant.

Ainsi, comme illustré sur la figure 5B, lorsque le navire 10 continue à dérouler la conduite flexible, du fait qu'il se trouve à la distance Lb de l'axe Z1Z1', donc plus proche de l'axe de la structure 4, ladite conduite flexible glisse naturellement sur la goulotte inférieure 3b, principalement sur sa partie gauche 3-1, et l'anneau 7 vient alors en butée en 3-3 au niveau de la transition de diamètre entre les partie gauche 3-1 et partie droite 3-2 de goulotte, comme illustré sur la figure 6C.

Lorsque l'on continue la descente de la portion de conduite 1-2c, l'anneau 7 se rapproche de l'épaulement 3-3 jusqu'à y être bloqué par retenu.

Dans cette position, la conduite flexible 1 vers la plateforme 2 est en configuration définitive 1-1d et ne bouge alors sensiblement plus. Le navire 10 continue alors à dérouler la conduite flexible 1 de sorte que la portion de conduite en aval adopte la configuration 1-2d. Puis, le navire continue à avancer de manière à ajuster le point de contact 1-2b avec le fond de la mer 5 pour qu'il soit sensiblement à une distance R1 de l'axe Z1Z1'. Enfin, le navire 10 poursuit de manière connue sa pose courante de la conduite en configuration 1-2e vers les têtes de puits, non représentées.

Sur la figure 6B, on a représenté en vue de dessus la conduite flexible 1 équipée de son anneau de blocage 7.

Sur la figure 6C, on a représenté en vue de dessus la conduite flexible 1 équipée de son anneau de blocage 7 en position de butée sur la zone de transition 3-3 de la goulotte 3, un verrou 8 étant en position ouverte.

Sur la figure 6D, le verrou 8 est actionné par le ROV 11, interdisant alors tout mouvement de la conduite flexible 1, tant vers le haut, que vers la droite par rapport à la goulotte 3.

Pour éviter d'endommager la conduite flexible lors de l'installation sur les goulottes inférieures 3b, les goulottes supérieures 3a sont équipées comme mentionné précédemment d'un déflecteur 9, dont le profil externe est apte à éviter d'endommager une portion de conduite flexible pouvant rentrer en contact avec ledit déflecteur en cours de pose de la conduite. Le déflecteur avantageusement est présent à chacune des extrémités des deux parties 3-1 et 3-2. Le déflecteur à l'extrémité de la partie 3-1 est plus particulièrement utile lors de la phase initiale de transfert de l'extrémité 14 de la conduite vers la plateforme 2 et de son accrochage en 2b à ladite plateforme.

Sur les figures 7A et 7B, on a détaillé un verrou 8 comprenant deux portions semi-tubulaires 8a et 8b, articulées entre elles par une charnière 8c, la partie inférieure 8b étant solidaire de la goulotte 3 et la partie supérieure 8a étant apte à pivoter et venir se plaquer contre la face supérieure de l'anneau 7 une fois en place au niveau de la transition de la position de retenu et de blocage 3-3.

Pour la clarté des figures, les goulottes ont été décrites comme étant des portions de tore tronqué présentant une section transversale circulaire dont le diamètre est légèrement supérieur au diamètre de la conduite flexible (portion de goulotte 3-1), ou de celui de l'anneau (portion de goulotte 3-2), mais la forme de l'arche dans le plan XX' peut tout aussi bien être de type ellipse, parabolique ou toute autre forme à courbure variable, dont la courbure maximale est inférieure à la courbure critique limite de ladite conduite flexible. De même, la section transversale de la goulotte peut être de forme quelconque, par exemple en forme de U, étant entendu que la largeur intérieure du U dans la portion de goulotte 3-1 est légèrement supérieure au diamètre de la conduite flexible, et que la largeur intérieure du U dans la portion de goulotte 3-2 est légèrement supérieure au diamètre de l'anneau. De ce fait, le flexible sera correctement guidé entre les parois du U, et l'anneau se bloquera alors naturellement au niveau de la zone de changement de largeur de la forme en U de la goulotte, comme expliqué précédemment.

Le rayon de courbure des diverses goulottes a été représenté dans les diverses figures comme étant identiques, mais on adoptera avantageusement des rayons de courbure adaptés à chacune des conduites, ce qui permettra de minimiser le poids de l'ensemble et ainsi de réduire la flottabilité nécessaire, plus particulièrement dans les variantes du dispositif décrites en référence aux figures 4, 5A et 5B.

Dans la version flottante et articulée en référence à la figure 4, les chaînettes simples 1-2a et 1-2b se déforment de manière significative lorsque le support flottant se déplace au gré de la houle, du vent et des courants, et il est alors important que les rayons R1 et R2, respectivement R3 et R4 soient très différents avec R2 > R1, respectivement R4 > R3, de manière à éviter tout contact entre les conduites flexibles supportées respectivement par les goulottes 3a et 3b. Par contre, dans le cas d'une structure 4 fixe, comme décrite en référence aux figures 1, 2 et 3, les portions de chaînette simples 1-2a et 1-2b restent sensiblement fixes quelque soient les déplacements du support flottant au gré de la houle, du vent et des courants : les valeurs des rayons R1-R2, respectivement R3-R4 ne sont alors plus vraiment critiques, mais on préférera quand même, pour des considérations d'inspection futures par ROV répartir les conduites comme indiquées dans l'invention de manière à éviter de confondre des conduites flexibles en provenance des goulottes supérieures avec des conduites en provenance des goulottes inférieures, étant entendu que les conduites flexibles quittent le fond de la mer vers leurs goulottes respectives situées 100 à 200m plus haut, et que la visibilité dans les grands fonds est limité à quelques mètres, voire quelques dizaines de mètres au plus.

## Revendications

1. Installation de liaisons fond-surface entre un même support flottant (2) et le fond de la mer, comprenant une pluralité de lignes flexibles comprenant des conduites flexibles (1) s'étendant depuis ledit support flottant et le fond de la mer où elles sont connectées à des têtes de puits, équipements ou extrémités de conduites sous-marines reposant au fond de la mer de ladite installation, lesdites lignes flexibles étant supportées par respectivement une pluralité d'éléments de support et guidage en forme d'arche dénommés goulottes (3, 3a-3b) délimitant chacune deux portions de conduite comprenant une première portion de ligne flexible (1-1) en configuration de chainette double plongeante entre le support flottant (2) et ladite goulotte et une deuxième portion de ligne flexible (1-2) en configuration de chainette simple entre ladite goulotte et le point de contact (1-2a, 1-2b) de la conduite flexible au fond de la mer,
   **caractérisée en ce qu'**elle comprend au moins une structure de support de goulottes (4) comprenant une partie inférieure formant embase (4-1) reposant et/ou ancrée ou enfoncée au fond de la mer et une partie supérieure (4-2, 4-2a - 4-2b) supportant au moins deux goulottes inférieure (3b) et respectivement supérieure (3a) disposées à des hauteurs différentes (Ha, Hb) de telle sorte que le point bas (1-1b) de la chainette double plongeante de la première portion (1-1) de ligne flexible passant par la goulotte inférieure (3b) est situé au-dessous du point bas (1-1a) de la chainette double plongeante de ladite première portion (1-1) de ligne flexible passant par la goulotte supérieure (3a), et le point de contact (1-2b) avec le sol marin (5) de la ligne flexible (1) passant par la goulotte inférieure (3b) est plus proche de ladite embase que le point de contact (1-2a) avec le sol marin (5) de la ligne flexible (1) passant par la goulotte supérieure (3a), ladite partie supérieure (4-2, 4-2a - 4-2b) de la structure support de goulotte (4) étant une structure rigide autre qu'un flotteur.

2. Installation de liaisons fond-surface selon la revendication 1, **caractérisée en ce que** ladite partie supérieure (4-2) de ladite structure de support de goulottes (4) comprend au moins deux éléments de support rigides inférieure (4-2b) et respectivement supérieure (4-2a) disposés à des hauteurs différentes (Ha, Hb) et supportant chacun une pluralité de goulottes décalées latéralement dans une direction (YY') dans un plan vertical perpendiculaire au plan axial vertical (P) de ladite structure de support (4) et desdits éléments de support rigides (4-2a,4-2b) et/ou perpendiculaire aux plans axiaux longitudinaux verticaux des dites goulottes, de préférence parallèles entre eux, lesdites goulottes étant de préférence disposées symétriquement par rapport à un plan axial vertical (P) de ladite structure de support (4) et desdits éléments de support rigides (4-2a, 4-2b).

3. Installation de liaisons fond-surface selon la revendication 1 ou 2, **caractérisée en ce qu'**elle comprend au moins deux dites structures de support de goulottes (4) dont lesdits plans axiaux verticaux (P) sont disposés angulairement $\alpha$.

4. Installation de liaisons fond-surface selon l'une des revendications 1 à 3, **caractérisée en ce que** les deux deuxièmes portions de lignes flexibles (1-2) de deux lignes flexibles passant par deux goulottes adjacentes supportées par un même élément de support rigide décalées latéralement sont disposées angulairement l'une par rapport à l'autre d'un angle ($\alpha_2$) supérieur à l'angle ($\alpha_1$) des deux première portions de lignes flexibles (1-2) des mêmes deux lignes flexibles.

5. Installation de liaisons fond-surface selon l'une des revendications 1 à 4, **caractérisée en ce qu'**une dite conduite flexible est maintenue dans une dite goulotte par des moyens de retenue et/ou des moyens d'accrochage (7,8).

6. Installation de liaisons fond-surface selon la revendication 5, **caractérisée en ce que** lesdits moyens de retenue ou moyens d'accrochage sont constitués par un dispositif tubulaire formant un anneau (7) pré positionné autour de ladite conduite à une distance prédéterminée par rapport à l'extrémité de la conduite fixée au support flottant, ledit anneau étant apte à être bloqué (3-1, 3-2) et/ou verrouillé (8) dans ladite goulotte, de préférence ladite goulotte comportant une première partie (3-1) de canal interne (3-4) contenant ou étant apte à contenir une dite conduite flexible mais ne pouvant contenir ladite conduite entourée dudit anneau, ladite première partie de goulotte étant située du côté de la goulotte le plus proche du support flottant, la largeur en section transversale du canal interne (3-4) de ladite première partie (3-1) de goulotte étant plus petite que celle de la section transversale du canal interne (3-4) d'une deuxième partie (3-2) de goulotte disposée du côté de la goulotte le plus éloigné du support flottant, le canal interne de ladite deuxième partie de goulotte interne contenant ou étant apte à contenir une dite conduite flexible entourée dudit anneau, ledit anneau étant retenu par un épaulement (3-3) au niveau de la zone de variation de largeur, de préférence variation discontinue de largeur, entre les deux canaux internes des deux première et deuxième parties de goulotte (3-1, 3-2).

7. Installation de liaisons fond-surface selon l'une des revendications 1 à 6, **caractérisée en ce que** lesdits éléments de support rigides (4-2a, 4-2b) de goulottes forment des poutres horizontales.

8. Installation de liaisons fond-surface selon l'une des revendications 1 à 6, **caractérisée en ce que** les goulottes supportées par un même élément de support rigide (4-2a, 4-2b) sont disposées à des hauteurs différentes, de préférence ledit élément de support rigide définissant une surface de support de goulottes plane et inclinée.

9. Installation de liaisons fond-surface selon l'une des revendications 1 à 8, **caractérisée en ce que** les points bas (1-1a, 1-1b) de deux premières portions de lignes flexibles (1-1) passant par des goulottes adjacentes supportées par un même élément de support rigide (4-2a, 4-2b) sont à des hauteurs différentes (H1-H2, H1'-H2').

10. Installation de liaisons fond-surface selon l'une des revendications 1 à 9, **caractérisée en ce que** ladite structure de support de goulottes (4) est une structure rigide comportant une tour rigide (4-2c) s'élevant au-dessus d'une dite embase (4-1) reposant et/ou ancrée au fond de la mer (5) à laquelle elle est fixée rigidement.

11. Installation de liaison fond-surface selon la revendication 10, **caractérisée en ce que** ladite embase est une structure métallique en treillis s'étendant horizontalement reposant au fond de la mer et ladite tour rigide (4-2c) est une structure métallique en treillis s'élevant verticalement supportant au moins deux éléments de support rigides supérieur (4-2a) et inférieur (4-2b) formant des poutres s'étendant, de préférence symétriquement, de part et d'autre de la tour sur au moins deux niveaux en hauteur, poutres au-dessus desquelles sont fixées des dites goulottes (3a, 3b), ladite tour étant fixée à ladite structure métallique en treillis de ladite embase (4-1) par des éléments de liaison et de renfort rigides inclinés (4-3).

12. Installation de liaisons fond-surface selon l'une des revendications 1 à 9, **caractérisée en ce que** ladite structure de support de goulottes (4) est une structure articulée comportant au moins deux éléments de support rigides supérieur (4-2a) et inférieur(4-2b) formant des poutres disposées l'une au-dessus de l'autre et reliées l'une à l'autre par des premiers éléments de liaison souples tels que des premiers haubans (4-3a), ledit élément de support de goulottes inférieur (4-2b) étant relié à ladite embase par des deuxièmes éléments de liaison souples tels que des deuxièmes haubans (4-3b), lesdits éléments de support rigides supérieur (4-2a) et inférieur (4-2b) étant maintenus au-dessus l'un de l'autre et au-dessus d'une dite embase (4-1) par au moins un élément de flottabilité immergé (4-4) fixé à au moins ledit élément de support de goulottes supérieur (4-2a) apte à tensionner lesdits premiers et deuxièmes haubans, ladite embase étant de préférence enfoncée au fond de la mer (5).

13. Installation de liaisons fond-surface selon la revendication 12, **caractérisée en ce que** ledit élément de support rigide supérieur (4-2a) est suspendu à un flotteur supérieur immergé (4-4a) auquel il est relié par des troisièmes éléments de liaison souples tels que des élingues (4-3c), et de préférence ledit dit élément de support rigide supérieur (4-2a) est supporté par un flotteur inférieur (4-4b) sur lequel il est fixé.

14. Installation de liaisons fond-surface selon l'une des revendications 1 à 13, **caractérisée en ce que** ledit élément de support de goulottes supérieur (4-4a) ou les extrémités des goulottes qu'il supporte comprennent un déflecteur (9) dont le profil est apte à éviter d'endommager la portion de conduite flexible pouvant rentrer en contact avec ledit déflecteur en cours de pose de la conduite sur une dite goulotte inférieure.

15. Installation de liaisons fond-surface selon l'une des revendications 1 à 14, **caractérisée en ce que** ladite goulotte supérieure (3a) est à une hauteur (h0) au-dessus de la goulotte inférieure (3b) la plus proche telle que le segment passant par l'extrémité longitudinale de la goulotte supérieure et le sommet du fond de la goulotte inférieure forme un angle $\alpha_3$ d'au moins 30°, de préférence au moins 45° par rapport à l'horizontale.

## Patentansprüche

1. Anlage für Boden-Oberflächen-Verbindungen zwischen einem schwimmenden Träger (2) und dem Meeresboden, umfassend mehrere flexible Leitungen, die Schlauchleitungen (1) umfassen, die sich von dem schwimmenden Träger und dem Meeresboden aus erstrecken, wo sie mit Bohrlochköpfen, Geräten oder Enden von Unterwasserleitungen der Anlage verbunden sind, die auf dem Meeresboden liegen, wobei die flexiblen Leitungen jeweils von mehreren bogenförmigen Stütz- und Führungselementen, sogenannten Kabelkanälen (3, 3a-3b), getragen werden, die jeweils zwei Leitungsabschnitte begrenzen, umfassend einen ersten flexiblen Leitungsabschnitt (1-1) in einer Konfiguration mit Doppeltauchkette zwischen dem schwimmenden Träger (2) und dem Kabelkanal und einen zweiten flexiblen Leitungsabschnitt (1-2) in einer Konfiguration mit einer einzigen Kette zwischen dem Kabelkanal und dem Kontaktpunkt (1-2a, 1-2b) der Schlauchleitung auf dem Meeresboden,
**dadurch gekennzeichnet, dass** sie mindestens eine Kabelkanal-Trägerstruktur (4) umfasst, die einen unteren Abschnitt, der eine Basis (4-1) bildet, die auf dem Meeresboden ruht und/oder verankert oder versenkt ist, und einen oberen Abschnitt (4-2, 4-2a - 4-2b), der mindestens zwei Kabelkanäle, einen unteren (3b) und einen entsprechenden oberen (3a) trägt, die in unterschiedlichen Höhen (Ha, Hb) derart angeordnet sind, dass der Tiefpunkt (1-1b) der Doppeltauchkette des ersten flexiblen Leitungsabschnitts (1-1), der durch den unteren Kabelkanal (3b) verläuft, unterhalb des Tiefpunktes (1-1a) der Doppeltauchkette des ersten flexiblen Leitungsabschnitts (1-1), der durch den oberen Kabelkanal (3a) verläuft, liegt, und der Berührungspunkt (1-2b) mit dem Meeresboden (5) der durch den unteren Kabelkanal (3b) verlaufenden flexiblen Leitung (1) näher an der Basis liegt als der Berührungspunkt (1-2a) mit dem Meeresboden (5) der durch den oberen Kabelkanal (3a) verlaufenden flexiblen Leitung (1), wobei es sich bei dem oberen Abschnitt (4-2, 4-2a - 4-2b) der Kabelkanal-Trägerstruktur (4) um eine andere starre Struktur als einen Schwimmer handelt.

2. Anlage für Boden-Oberflächen-Verbindungen nach Anspruch 1, **dadurch gekennzeichnet, dass** der obere Abschnitt (4-2) der Kabelkanal-Trägerstruktur (4) mindestens zwei starre Trägerelemente, nämlich ein unteres (4-2b) und ein entsprechendes oberes (4-2a), umfasst, die in unterschiedlichen Höhen (Ha, Hb) angeordnet sind und jeweils mehrere Kabelkanäle tragen, die seitlich in einer Richtung (YY') in einer vertikalen Ebene senkrecht zur vertikalen Achsenebene (P) der Trägerstruktur (4) und den starren Trägerelementen (4-2a, 4-2b), und/oder senkrecht zu den vertikalen Längsachsenebenen der Kabelkanäle, vorzugsweise parallel zueinander, versetzt sind, wobei die Kabelkanäle vorzugsweise symmetrisch zu einer vertikalen Achsenebene (P) der Trägerstruktur (4) und der starren Trägerelemente (4-2a, 4-2b) angeordnet sind.

3. Anlage für Boden-Oberflächen-Verbindungen nach Anspruch 1 oder 2, **dadurch gekennzeichnet, dass** sie mindestens zwei Kabelkanal-Trägerstrukturen (4) umfasst, von denen die vertikalen Achsenebenen (P) im Winkel $\alpha$ angeordnet sind.

4. Anlage für Boden-Oberflächen-Verbindungen nach einem der Ansprüche 1 bis 3, **dadurch gekennzeichnet, dass** die beiden zweiten flexiblen Leitungsabschnitte (1-2) von zwei flexiblen Leitungen, die durch zwei seitlich versetzte benachbarte Kabelkanäle verlaufen, die von demselben starren Trägerelement getragen werden, in einem Winkel ($\alpha_2$), der größer als der Winkel ($\alpha_1$) der beiden ersten flexiblen Leitungsabschnitte (1-2) der gleichen beiden flexiblen Leitungen ist, winklig zueinander angeordnet sind.

5. Anlage für Boden-Oberflächen-Verbindungen nach einem der Ansprüche 1 bis 4, **dadurch gekennzeichnet, dass** eine der genannten Schlauchleitungen in einem der genannten Kabelkanäle durch Rückhalte- und/oder Verhakungsmittel (7, 8) gehalten wird.

6. Anlage für Boden-Oberflächen-Verbindungen nach Anspruch 5, **dadurch gekennzeichnet, dass** die Rückhalte- oder Verhakungsmittel aus einer rohrförmigen Vorrichtung bestehen, die einen vorpositionierten Ring (7) um die Leitung in einem vorbestimmten Abstand von dem Ende der an dem schwimmenden Träger befestigten Leitung bildet, wobei der Ring in der Lage ist, in dem Kabelkanal blockiert (3-1, 3-2) und/oder verriegelt (8) zu werden, wobei der Kabelkanal vorzugsweise einen ersten Abschnitt (3-1) eines inneren Kanals (3-4) aufweist, der die Schlauchleitung aufnimmt oder aufnehmen kann, aber nicht die von dem Ring umgebene Leitung aufnehmen kann, wobei sich der erste Kabelkanalabschnitt auf der Seite des Kabelkanals befindet, die dem schwimmenden Träger am nächsten ist, die Querschnittsbreite des inneren Kanals (3-4) des ersten Abschnitts (3-1) des Kabelkanals kleiner ist als die Querschnittsbreite des inneren Kanals (3-4) eines zweiten Abschnitts (3-2) des Kabelkanals, der auf der Seite des Kabelkanals angeordnet ist, die von dem schwimmenden Träger am weitesten entfernt ist, der innere Kanal des zweiten Abschnitts des inneren Kabelkanals eine der besagten Schlauchleitungen aufnimmt oder aufnehmen kann, die von dem Ring umgeben ist, wobei der Ring durch einen Absatz (3-3) auf der Höhe der Breitenänderungszone, vorzugsweise einer diskontinuierlichen Breitenänderung, zwischen den beiden inneren Kanälen der beiden ersten und zweiten Kabelkanalabschnitte (3-1, 3-2) zurückgehalten wird.

7. Anlage für Boden-Oberflächen-Verbindungen nach einem der Ansprüche 1 bis 6, **dadurch gekennzeichnet, dass** die starren Trägerelemente (4-2a, 4-2b) der Kabelkanäle horizontale Balken bilden.

8. Anlage für Boden-Oberflächen-Verbindungen nach einem der Ansprüche 1 bis 6, **dadurch gekennzeichnet, dass** die von demselben starren Trägerelement (4-2a, 4-2b) getragenen Kabelkanäle in unterschiedlichen Höhen angeordnet sind, wobei vorzugsweise das starre Trägerelement eine ebene und geneigte Kabelkanal-Trägerfläche definiert.

9. Anlage für Boden-Oberflächen-Verbindungen nach einem der Ansprüche 1 bis 8, **dadurch gekennzeichnet, dass** die Tiefpunkte (1-1a, 1-1b) von zwei ersten Abschnitten flexibler Leitungen (1-1), die durch benachbarte Kabelkanäle führen, die von demselben starren Trägerelement (4-2a, 4-2b) getragen werden, auf unterschiedlichen Höhen (H1-H2, H1'-H2') liegen.

10. Anlage für Boden-Oberflächen-Verbindungen nach einem der Ansprüche 1 bis 9, **dadurch gekennzeichnet, dass** die Kabelkanal-Trägerstruktur (4) eine starre Struktur ist, die einen starren Turm (4-2c) umfasst, der sich über eine besagte Basis (4-1) erhebt, die auf dem Meeresboden (5) ruht und/oder verankert ist, an der sie starr befestigt ist.

11. Anlage für Boden-Oberflächen-Verbindungen nach Anspruch 10, **dadurch gekennzeichnet, dass** die Basis eine sich horizontal erstreckende Metallgitterstruktur ist, die auf dem Meeresboden ruht, und der starre Turm (4-2c) eine sich vertikal erhebende Metallgitterstruktur ist, die mindestens zwei starre Trägerelemente trägt, nämlich ein oberes (4-2a) und ein unteres (4-2b), die Balken bilden, die sich, vorzugsweise symmetrisch, auf beiden Seiten des Turms auf mindestens zwei Höhenebenen erstrecken, wobei über den Balken die Kabelkanäle (3a, 3b) befestigt sind, wobei der Turm an der Metallgitterstruktur der Basis (4-1) durch geneigte starre Verbindungs- und Verstärkungselemente (4-3) befestigt ist.

**12.** Anlage für Boden-Oberflächen-Verbindungen nach einem der Ansprüche 1 bis 9, **dadurch gekennzeichnet, dass** die Kabelkanal-Trägerstruktur (4) eine Gelenkstruktur ist, die mindestens zwei starre Trägerelemente, nämlich ein oberes (4-2a) und ein unteres (4-2b), umfasst, die übereinander angeordnete Balken bilden und durch erste flexible Verbindungselemente, wie beispielsweise erste Abspannungen (4-3a) miteinander verbunden sind, wobei das untere Kabelkanal-Trägerelement (4-2b) mit der Basis durch zweite flexible Verbindungselemente, wie beispielsweise zweite Abspannungen (4-3b), verbunden ist, wobei die oberen (4-2a) und unteren (4-2b) starren Trägerelemente übereinander und oberhalb einer besagten Basis (4-1) durch mindestens ein eingetauchtes Auftriebselement (4-4) gehalten werden, das an mindestens dem oberen Kabelkanal-Trägerelement (4-2a) befestigt ist und in der Lage ist, die ersten und zweiten Abspannungen zu spannen, wobei die Basis vorzugsweise in den Meeresboden (5) gedrückt wird.

**13.** Anlage für Boden-Oberflächen-Verbindungen nach Anspruch 12, **dadurch gekennzeichnet, dass** das obere starre Trägerelement (4-2a) an einem eingetauchten oberen Schwimmer (4-4a) aufgehängt ist, mit dem es durch dritte flexible Verbindungselemente, wie Seile (4-3c), verbunden ist, und vorzugsweise das obere starre Trägerelement (4-2a) durch einen unteren Schwimmer (4-4b) getragen wird, an dem es befestigt ist.

**14.** Anlage für Boden-Oberflächen-Verbindungen nach einem der Ansprüche 1 bis 13, **dadurch gekennzeichnet, dass** das obere Kabelkanal-Trägerelement (4-4a) oder die Enden des von ihm getragenen Kabelkanals einen Deflektor (9) umfassen, dessen Profil so ausgebildet ist, dass eine Beschädigung des Abschnitts der Schlauchleitung, der während der Montage der Leitung an dem unteren Kabelkanal mit dem Deflektor in Berührung kommen kann, vermieden wird.

**15.** Anlage für Boden-Oberflächen-Verbindungen nach einem der Ansprüche 1 bis 14, **dadurch gekennzeichnet, dass** sich der obere Kabelkanal (3a) in einer Höhe (h0) über dem nächstgelegenen unteren Kabelkanal (3b) befindet, sodass das Segment, das durch das Längsende des oberen Kabelkanals und die Spitze des Bodens des unteren Kabelkanals verläuft, einen Winkel $\alpha_3$ von mindestens 30°, vorzugsweise mindestens 45° gegenüber der Horizontalen, bildet.

**Claims**

**1.** A bottom-to-surface connection installation between a common floating support (2) and the sea bottom, the installation comprising a plurality of flexible lines comprising flexible pipes (1) between said floating support and the sea bottom when they are connected to well heads, pieces of equipment or ends of undersea pipes resting on the sea bottom of said installation, said flexible lines being supported respectively by a plurality of support and guide elements of arch shape referred to as troughs (3, 3a-3b), each trough lying between two pipe portions comprising a first flexible line portion (1-1) in a double hanging catenary configuration between the floating support (2) and said trough, and a second flexible line portion (1-2) in a single catenary configuration between said trough and the point of contact (1-2a, 1-2b) between said flexible pipe and the sea bottom, the installation being **characterized in that** it includes at least one trough support structure (4) comprising a base-forming bottom portion (4-1) resting on and/or anchored to or embedded in the sea bottom and a top portion (4-2, 4-2a - 4-2b) supporting at least two troughs, respectively a bottom trough (3b) and a top trough (3a) arranged at different heights (Ha, Hb) such that the low point (1-1b) of the hanging double catenary of the first flexible line portion (1-1) passing via the bottom trough (3b) is situated below the low point (1-1a) of the hanging double catenary of said first flexible line portion (1-1) passing via the top trough (3a), and the point of contact (1-2b) with the sea floor (5) of the flexible line (1) passing via the bottom trough (3b) is closer to said base than is the point of contact (1-2a) with the sea floor (5) of the flexible line (1) passing via the top trough (3a), said top portion (4-2, 4-2a - 4-2b) of the trough support structure (4) being a rigid structure other than a float.

**2.** A bottom-to-surface connection installation according to claim 1, **characterized in that** said top portion (4-2) of said trough support structure (4) comprises at least two rigid support elements, respectively a bottom element (4-2b) and a top element (4-2a), arranged at different heights (Ha, Hb) and each supporting a plurality of troughs that are laterally offset in a direction (YY') in a vertical plane perpendicular to the vertical axial plane (P) of said support structure (4) and of said rigid support elements (4-2a, 4-2b) and/or perpendicular to the vertical longitudinal axial planes of said troughs, which are preferably parallel to one another, said troughs preferably being arranged symmetrically relative to a vertical axial plane (P) of said support structure (4) and of said rigid support elements (4-2a, 4-2b).

**3.** A bottom-to-surface connection installation according to claim 1 or claim 2, **characterized in that** it includes at least two of said trough support structures (4) with said vertical axial planes (P) being disposed angularly at an angle $\alpha$.

4. A bottom-to-surface connection installation according to any one of claims 1 to 3, **characterized in that** the two second flexible line portions (1-2) of two flexible lines pass via two adjacent troughs supported by a common rigid support element, the troughs being laterally offset and arranged angularly relative to each other at an angle ($\alpha_2$) that is greater than the angle ($\alpha_1$) of the two first portions of the flexible lines (1-2) of the same two flexible lines.

5. A bottom-to-surface connection installation according to any one of claims 1 to 4, **characterized in that** a said flexible pipe is held in a said trough by retaining means and/or attachment means (7, 8).

6. A bottom-to-surface connection installation according to claim 5, **characterized in that** said retaining means or attachment means are constituted by a tubular device forming a ring (7) that is prepositioned around said pipe at a predetermined distance from the end of the pipe that is fastened to the floating support, said ring being suitable for being blocked (3-1, 3-2) and/or locked (8) in said trough, said trough preferably including a first portion (3-1) of an internal channel (3-4) containing or suitable for containing a said flexible pipe but not capable of containing said pipe surrounded by said ring, said first trough portion being situated at the end of the trough that is closer to the floating support, the cross-sectional width of the internal channel (3-4) of said first trough portion (3-1) being smaller than the cross-sectional width of the internal channel (3-4) of a second trough portion (3-2) arranged at the end of the trough that is further from the floating support, the internal channel of said second trough portion containing or being suitable for containing a said flexible pipe surrounded by said ring, said ring being retained by a shoulder (3-3) at the zone where the width varies, the variation in width preferably being discontinuous, between the two internal channels of the first and second trough portions (3-1, 3-2).

7. A bottom-to-surface connection installation according to any one of claims 1 to 6, **characterized in that** said rigid support elements (4-2a, 4-2b) for troughs form horizontal beams.

8. A bottom-to-surface connection installation according to any one of claims 1 to 6, **characterized in that** the troughs supported by a common rigid support element (4-2a, 4-2b) are arranged at different heights, said rigid support element preferably defining a trough support surface that is plane and sloping.

9. A bottom-to-surface connection installation according to any one of claims 1 to 8, **characterized in that** the low points (1-1a, 1-1b) of two first flexible line portions (1-1) passing via adjacent troughs supported by a common rigid support element (4-2a, 4-2b) are at different heights (H1-H2, H1'-H2').

10. A bottom-to-surface connection installation according to any one of claims 1 to 9, **characterized in that** said trough support structure (4) is a rigid structure comprising a rigid tower (4-2c) rising above a said base (4-1) resting on and/or anchored to the sea bottom (5) to which it is rigidly secured.

11. A bottom-to-surface connection installation according to claim 10, **characterized in that** said base is a metal lattice structure extending horizontally and resting on the sea bottom, and said rigid tower (4-2c) is a metal lattice structure rising vertically and supporting at least two rigid support elements, a top support element (4-2a) and a bottom support element (4-2b) forming beams that extend, preferably symmetrically, on either side of the tower along at least two vertical levels, said troughs (3a, 3b) being fastened on top of the beams, said tower being fastened to said metal lattice structure of said base (4-1) by sloping rigid connection and reinforcing elements (4-3).

12. A bottom-to-surface connection installation according to any one of claims 1 to 9, **characterized in that** said trough support structure (4) is a hinged structure comprising at least two rigid support elements, a top element (4-2a) and a bottom element (4-2b), forming beams arranged one above the other and connected together by first flexible connection elements such as first stays (4-3a), said bottom trough support element (4-2b) being connected to said base by second flexible connection elements such as second stays (4-3b), said top and bottom rigid support elements (4-2a, 4-2b) being held one above the other and above a said base (4-1) by at least one submerged buoyancy element (4-4) fastened to at least one said top trough support element (4-2a) suitable for tensioning said first and second stays, said base preferably being embedded in the sea bottom (5).

13. A bottom-to-surface connection installation according to claim 12, **characterized in that** said top rigid support element (4-2a) is suspended from a submerged top float (4-4a) to which it is connected by third flexible connection elements such as slings (4-3c), and preferably said top rigid support element (4-2a) is supported by a bottom float (4-4b) on which it is fastened.

14. A bottom-to-surface connection installation according to any one of claims 1 to 13, **characterized in that** said top trough element (4-4a) or the ends of the troughs that it supports include(s) a deflector (9) of profile suitable for avoiding damaging any portion of flexible pipe that might come into contact with said deflector while the pipe is being laid on a said bottom trough.

15. A bottom-to-surface connection installation according to any one of claims 1 to 14, **characterized in that** said top trough (3a) is at a height (h0) above the closest bottom trough (3b) such that the segment passing via the longitudinal end of the top trough and the top of the bottom of the bottom trough forms an angle $\alpha_3$ of at least 30°, and preferably of at least 45°, relative to the horizontal.

FIG.1

FIG.2

EP 2 785 952 B1

FIG.3

FIG.4

EP 2 785 952 B1

FIG.5A

FIG.5B

3

3-1  3-3      3-2

← A

3-4                                3-4

3-1                                3-2

8

← A

**FIG.6A**

1                    7

**FIG.6B**

1          3-1      7    3-2

8

**FIG.6C**

1          3-1      7    3-2

3-3

8

**FIG.6D**

8a

8 { 8c                    3

8b

**FIG.7B**

7a    7

1          7b

8a    8b    3

8

**FIG.7A**

FIG.8A

FIG.8B

FIG.9

FIG.10

**EP 2 785 952 B1**

## RÉFÉRENCES CITÉES DANS LA DESCRIPTION

**Documents brevets cités dans la description**

- WO 0266786 A
- WO 02103153 A
- WO 2011061422 A
- WO 0031372 A
- EP 0251488 A

**Littérature non-brevet citée dans la description**

- les conduites connues sous la dénomination « flexibles ». conduite flexible. l'American Petroleum Institute (API)